# EUROPEAN PATENT APPLICATION

(11) **EP 2 912 973 A1**
(43) Date of publication of application: **02.09.2015**
(21) Application number: 13848706.1
(22) Date of filing: 17.10.2013
(51) Int. Cl.: A47C 7/54, B60N 2/46

(54) **ARMREST MOUNTING STRUCTURE**

(30) Priority: 25.10.2012 JP 2012235776; 17.05.2013 JP 2013105282
(71) Applicant: Toyota Shatai Kabushiki Kaisha, Kariya-shi, Aichi 448-8666 (JP)
(72) Inventor: TAKATA, Masahiro, Kariya-shi Aichi 448-8666 (JP); NAYA, Ryoutarou, Kariya-shi Aichi 448-8666 (JP)
(74) Representative: Appleyard Lees
(86) International application number: PCT/JP2013/078209
(87) International publication number: WO 2014/065193

(57) **Abstract**

An inner bracket (40) includes a side wall (43) covering the inner side of a back frame (30), a side wall (41) covering the rear side, and a side wall (42) covering the front side. An outer bracket (50) includes a supporting side wall (51), which supports an armrest (20) and covers the outer side of the back frame (30), and a side wall (52) arranged overlapping the side wall (42) of the inner bracket (40). The supporting side wall (51) is coupled to the side wall (42) of the inner bracket (40) by a bolt (85) and a nut (86). The inner bracket (40) and the outer bracket (50) are fastened together and fixed to the back frame (30) by a nut (72) and a through bolt (70) extending through the side wall (41) of the inner bracket (40), the side wall (52) of the outer bracket (50), the back frame (30), and the side wall (42) of the inner bracket (40).

## Description

### TECHNICAL FIELD

The present invention relates to an armrest coupling structure.

### BACKGROUND ART

In the prior art, an armrest may be coupled to a seat, such as a driver seat and a passenger seat, for an automobile when shipped from a factory or after shipment from a factory, in which case the armrest is retrofitted (patent document 1). When coupling an armrest in a factory, an armrest coupling bracket is often welded to a back frame to secure coupling strength of the armrest.

When retrofitting an armrest, an armrest coupling bracket is retrofitted to a back frame.

Patent document 1 discloses two retrofitting methods for armrest coupling brackets. In the first method, a plurality of bracket fastening nuts used to fasten an armrest coupling bracket are welded and fixed to the side surface of a seat frame in advance so that a dealer can retrofit an armrest after shipment from a factory. The armrest coupling bracket is fastened to the fastening nuts by bolts. Then, the armrest is coupled to the armrest coupling bracket. Thus, by welding and fixing the fastening nuts, the coupling strength can be increased when fixing the armrest coupling bracket with the bolts.

In the second method, a support member having a U-shaped cross-section is positioned so that one side wall thereof is engaged with an inner surface of a seat frame and a stopper is arranged at an opposite side wall of the support member. In the second method, coupling holes formed in the stopper, the support member, and the armrest coupling bracket are aligned to receive a bolt. The received bolt is fastened to a nut that is welded and fixed to an inner surface of the opposite side wall of the support member. Also in the case of the second method, the nut is welded and fixed to the support member. Thus, the coupling strength can be increased when fixing the armrest coupling bracket with the bolt.

Patent document 2 indicates the level of the art for an armrest coupling structure when the application was filed. In the disclosure of patent document 2, an armrest is fixed to a bracket, which is fixed to the frame of a seatback, when shipped from a factory. Although not explicitly described, it may be assumed that the bracket is welded and fixed to the frame. Patent document 3 also indicates the level of the art for an armrest coupling structure when the application was filed, and discloses a bracket welded and fixed to the frame of a seatback, and fixing an armrest to the bracket.

### PRIOR ART DOCUMENTS

### PATENT DOCUMENTS

Patent Document 1: Japanese Laid-Open Patent Publication No. 2004-248857
Patent Document 2: Japanese Laid-Open Patent Publication No. 2007-229134
Patent Document 3: Japanese Laid-Open Patent Publication No. 2010-167856

### SUMMARY OF THE INVENTION

### PROBLEMS THAT ARE TO BE SOLVED BY THE INVENTION

However, to secure coupling strength of an armrest coupling bracket when retrofitting an armrest with the first method or the second method of patent document 1, fastening nuts need to be welded to the seat frame. Otherwise, a nut needs to be welded to the support member.

Accordingly, it is an objective of the present invention to provide an armrest coupling structure that can secure coupling strength of an armrest without the need for a welded member used when retrofitting the armrest.

### MEANS FOR SOLVING THE PROBLEM

To solve the above problem and in accordance with one aspect of the present invention, an armrest coupling structure is provided that includes a frame material extending in a vertical direction. A bracket body includes a front wall member, a rear wall member, and an outer wall member respectively arranged to cover at least a front side, a rear side, and an outer side of the frame material. The outer wall member is coupled directly to one of the front wall member and the rear wall member and coupled directly or by a fastening member to the other one of the front wall member and the rear wall member. The outer wall member rotationally supports an armrest. A through bolt extends through the front wall member, the frame material, and the rear wall member. A nut is fastened to the through bolt. The front wall member and the rear wall member are fastened together and fixed to the frame material by the through bolt and the nut.

The bracket body includes an outer bracket, in which the outer wall member and the rear wall member are directly coupled to each other, and an inner bracket. The inner bracket may include only the front wall member or the inner bracket may include the front wall member, an inner wall member directly coupled to the front wall member and arranged at an inner side of the frame material to cover the frame material, and a first overlapping wall member directly coupled to the inner wall member and arranged overlapping the rear wall member. The through bolt extends through the first overlapping wall member and the rear wall member.

Alternatively, the bracket body includes an outer bracket, in which the outer wall member and the front wall member are directly coupled to each other, and an inner bracket. The inner bracket may include the rear wall member, an inner wall member directly coupled to the rear wall member and arranged at an inner side of the frame material to cover the frame material, and a second overlapping wall member directly coupled to the inner wall member and arranged overlapping the front wall member. The through bolt extends through the second overlapping wall member and the front wall member.

Alternatively, the bracket body includes an outer bracket, in which the front wall member and the rear wall member are directly coupled to the outer wall member, and an inner bracket. The inner bracket may include an inner wall member arranged at an inner side of the frame material to cover the frame material and coupled to one of the front wall member and the rear wall member by a fastening member, and a third overlapping wall member directly coupled to the inner wall member and arranged overlapping the other one of the front wall member and the rear wall member. The through bolt extends through the third overlapping wall member.

Alternatively, the bracket body may include an outer bracket, in which the front wall member and the rear wall member are directly coupled to the outer wall member, and a reinforcement member, which is fixed to an outer surface of the outer wall member. The reinforcement member rotationally supports the armrest and the outer wall member.

The present invention is preferable when the frame material of the present invention is formed by a pipe.

A plastic deformation preventing member that prevents plastic deformation of the frame material when fastening the through bolt may be located between the frame material and an inner surface of the outer wall member facing the frame material.

The front wall member and the rear wall member of the bracket body may be arranged to form a gap with the frame material before fastening the through bolt. The plastic deformation preventing member preferably tolerates movement of the front wall member and the rear wall member until at least the gap is eliminated against an elastic force of the front wall member and the rear wall member when fastening the through bolt and the nut.

### EFFECTS OF THE INVENTION

The armrest coupling structure succeeds in securing coupling strength of an armrest without the need for a welded member used when retrofitting the armrest.

### BRIEF DESCRIPTION OF THE DRAWINGS

Fig. 1 is a perspective view of a seat including an armrest coupling structure according to a first embodiment of the present invention.
Fig. 2 is a perspective view showing the main part of the armrest coupling structure in the first embodiment.
Fig. 3 is a cross-sectional view taken along line 3-3 in Fig. 2.
Fig. 4 is a cross-sectional view taken along line 4-4 in Fig. 2.
Fig. 5 is a perspective view of an inner bracket in the first embodiment.
Fig. 6 is a perspective view of an outer bracket in the first embodiment.
Fig. 7 is a cross-sectional view corresponding to Fig. 3 and showing a second embodiment of the present invention.
Fig. 8(a) is a diagram illustrating part of Fig. 4 in a simplified manner.
Figs. 8(b), 8(c), and 8(d) are diagrams corresponding to Fig. 8(a) and showing a third embodiment, a fourth embodiment, and a fifth embodiment, respectively, of the present invention.
Fig. 9 is an exploded perspective view of a seat including an armrest coupling structure according to a sixth embodiment of the present invention.
Fig. 10 is a perspective view of the main parts of the armrest coupling structure of the sixth embodiment.
Fig. 11 is a cross-sectional view taken along line 11-11 in Fig. 10.
Fig. 12 is a cross-sectional view taken along line 12-12 in Fig. 10.
Fig. 13 is a cross-sectional view taken along line 13-13 in Fig. 10.
Fig. 14 is a perspective view of an inner bracket in the sixth embodiment.
Fig. 15 is a perspective view of an outer bracket in the sixth embodiment.
Fig. 16 is an exploded perspective view of a seat including an armrest coupling structure according to a seventh embodiment of the present invention.
Fig. 17 is a perspective view of the main part of the armrest coupling structure in the seventh embodiment.
Fig. 18 is a cross-sectional view taken along line 18-18 in Fig. 17.
Fig. 19(A) is a cross-sectional view taken along line 19A-19A in Fig. 17.
Fig. 19(B) is a cross-sectional view taken along line 19B-19B in Fig. 17.
Fig. 20 is a perspective view of an outer bracket in the seventh embodiment.

### MODES FOR CARRYING OUT THE INVENTION

### (First Embodiment: Support for First, Second, and Fifth Embodiments)

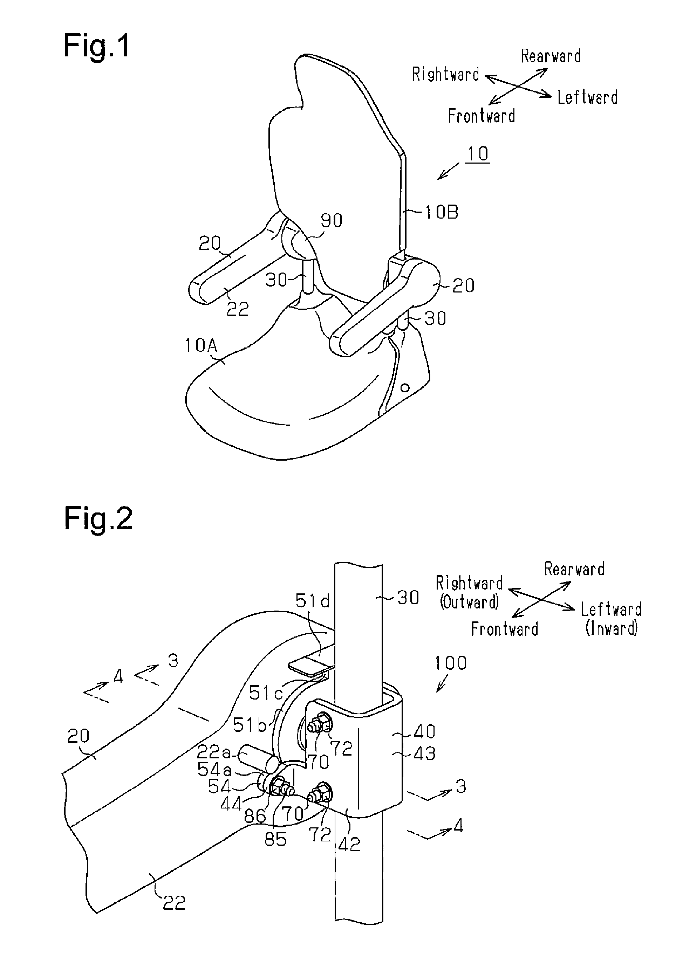

One embodiment of an armrest coupling structure for retrofitting an armrest to a vehicle seat will now be described with reference to Figs. 1 to 6. In the present specification, the frame of view is based on a passenger seated on a vehicle seat 10 with respect to front, rear, left, and right directions.

First, the vehicle seat will be described. The vehicle seat 10 includes a seating section 10A, a seatback 10B, and left and right armrests 20. A seating frame (not shown) is arranged in the seating section 10A. Left and right back frames 30 for supporting the seatback 10B is coupled to the left and right back ends of the seating frame by a reclining mechanism (not shown). The back frame 30 serving as a frame material includes a round tubular pipe made of metal, and extends in the upward and downward directions, that is, the vertical direction. The seating frame is covered with a cushion and a covering to configure the seating section 10A.

The armrest coupling structure of the present embodiment will now be described.

The features of the armrest coupling structure of the present embodiment is in that the armrest 20 is coupled to the back frame 30 by an inner bracket 40 and an outer bracket 50.

The inner bracket 40 and the outer bracket 50 configure a bracket body 100.

Each member for coupling the left armrest 20 to the left side of the back frame 30 and each member for coupling the right armrest 20 to the right side of the back frame 30 have a symmetrical configuration. Thus, the description on the armrest coupling structure of the back frame 30 on the left side will be omitted, and the armrest coupling structure of the back frame 30 on the right side of the vehicle seat 10 will be described below. In the following description related to the armrest coupling structure of the back frame 30 on the right side, right side means toward the outer side of the right back frame 30, and left side means toward the inner side of the right back frame 30. The right side in the armrest coupling structure of the left back frame 30 corresponds to the inner side of the left back frame 30, and the left side corresponds to the outer side of the left back frame 30.

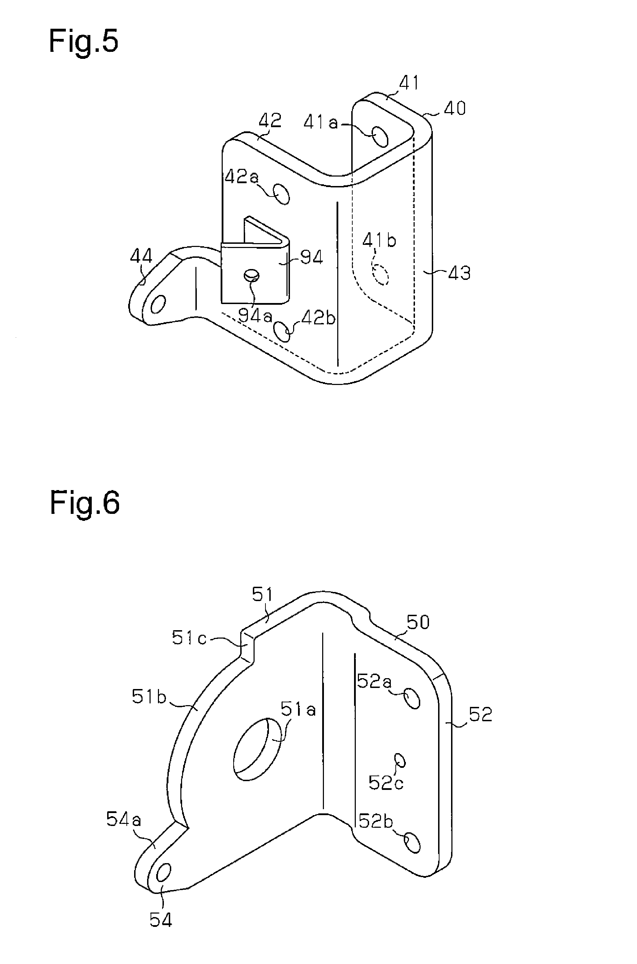

As shown in Fig. 5, the inner bracket 40, which is made from a metal material, includes two parallel side walls 41, 42 and a side wall 43 that couples the side walls 41, 42 so that the inner bracket 40 has a U-shaped cross-section. In the present embodiment, the side walls 41, 42 and the side wall 43 are flat. The side walls 41, 42 are contact the back frame 30 with a spacer 74 located in between, and the side wall 43 is in direct contact with or arranged proximate to the back frame 30.

The inner bracket 40 has a U-shaped cross-section. Thus, the side wall 43 covers the inner side (left side) of the back frame 30, the side wall 41 covers the rear side of the back frame 30, and the side wall 42 covers the front side of the back frame 30.

The side wall 41 corresponds to a first overlapping wall member.

The side wall 43 of the inner bracket 40 may be curved along the circumferential surface of the back frame 30 in contact with the back frame 30. In this case, the back frame 30 may also be covered by the inner bracket 40. As shown in Figs. 2, 4, and 5, a coupling piece 44, which extends parallel to or substantially parallel to the side wall 43, is formed so as to be bent to project toward the front side at a lower part of the side wall 42 of the inner bracket 40.

As shown in Fig. 5, two coupling holes 41a, 42a and two coupling holes 41b, 42b extend through the side walls 41, 42 of the inner bracket 40, respectively. The coupling hole 41a and the coupling hole 41 b of the side wall 41 are coaxial with the coupling hole 42a and the coupling hole 42b of the side wall 42.

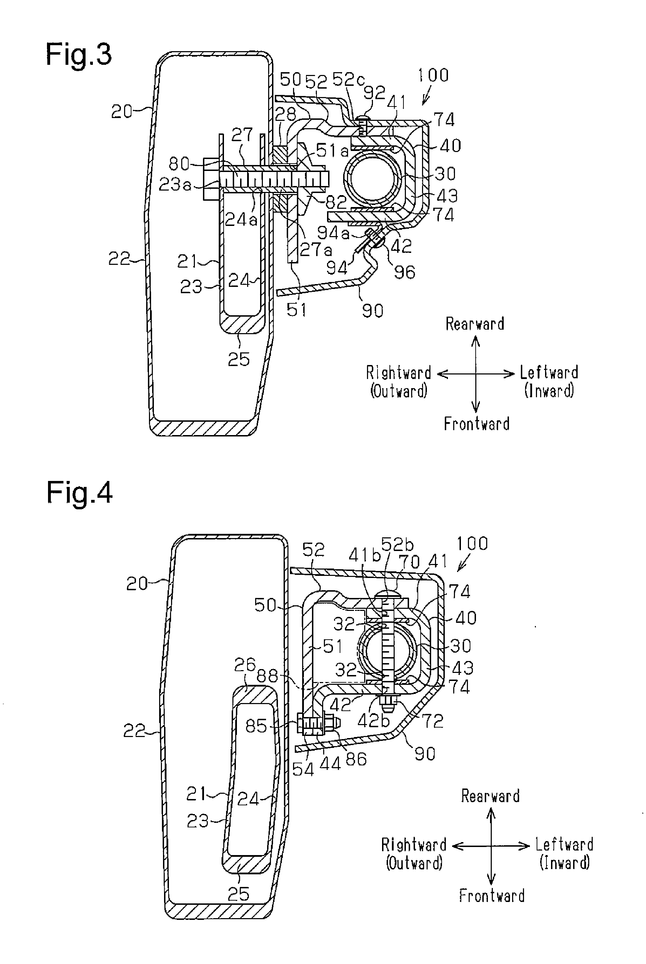

As shown in Figs. 2 and 4, the inner bracket 40 is fastened and fixed to the back frame 30 with a plurality of through bolts 70 and nuts 72 so as to sandwich the back frame 30 with the side walls 41, 42 from the front and the rear. Each bolt 70 is inserted into the coupling holes 41a, 42a or the coupling holes 41 b, 42b of the inner bracket 40, and a through hole 32 is formed in the back frame 30.

The through hole 32 may be formed in advance by the manufacturer or may be formed by the dealer when retrofitting the armrest.

In Fig. 4, the spacer 74 is arranged between the side wall 41 and the back frame 30 and between the side wall 42 and the back frame 30. In the present embodiment, there are two through bolts 70 and two nuts 72. However, the number of the through bolts 70 and the number of the nuts 72 may be three or more if the back frame 30 is formed to have a round tubular shape, and the number of coupling holes in the inner bracket 40 may be increased accordingly.

As shown in Fig. 6, the outer bracket 50, which is made from a metal material, includes a flat supporting side wall 51 and a flat side wall 52, which is integrally formed with the supporting side wall 51 and directly coupled to the supporting side wall 51, so that the outer bracket 50 has an L-shaped cross-section. The supporting side wall 51, which is arranged to cover the outer side of the back frame 30, functions to support the armrest 20. The side wall 52 is attached to the back frame 30. In the present embodiment, the supporting side wall 51 of the outer bracket 50 corresponds to an outer wall member, the side wall 52 of the outer bracket 50 corresponds to a rear wall member, and the side wall 42 of the inner bracket 40 corresponds to a front wall member.

Coupling holes 52a, 52b, which are aligned with the coupling holes 41a, 41b of the inner bracket 40, extend through the side wall 52 of the outer bracket 50. The outer bracket 50 is fastened by the two through bolts 70 and nuts 72 inserted into the coupling holes 52a, 52b from the rear side of the back frame 30 with the side wall 52 arranged on the outer surface of the side wall 41 of the inner bracket 40. In other words, the side walls 41, 42 of the inner bracket 40 and the side wall 52 of the outer bracket 50 are fastened together and fixed to the back frame 30 by the through bolts 70 and the nuts 72.

As shown in Fig. 6, a coupling piece 54 formed to project toward the front side is arranged at the lower end of the supporting side wall 51. As shown in Fig. 4, the coupling pieces 44, 54 are fastened to each other by a bolt 85, which is welded and fixed to the coupling piece 54, and a nut 86, which is fastened to the bolt 85 while overlapping the coupling piece 54 with the coupling piece 44 of the inner bracket 40. The bolt 85 and the nut 86 correspond to a fastening member.

The coupling pieces 44, 54 are coupled, and the inner bracket 40 and the outer bracket 50 are fastened together and fixed to the back frame 30 by the through bolt 70 and the nut 72. Thus, the brackets 40, 50 have a structure in which a frame-shaped plane extends through the coupling pieces 44, 54, as shown in Fig. 4.

As shown in Fig. 3, the armrest 20 is coupled to the supporting side wall 51 of the outer bracket 50. More specifically, a shaft hole 51a extends through the supporting side wall 51, and the armrest 20 is coupled to the outer bracket 50 with a distal end of a shaft 80 projecting from the armrest 20, as will be described later. The shaft 80 extends through the shaft hole 51a.

The configuration of the armrest 20 will now be described.

As shown in Fig. 1, the armrest 20 has an oblong shape. An armrest frame 21 is arranged inside the armrest 20. The armrest frame 21 is covered by a cushion (not shown) and a covering frame 22. A portion excluding a basal end of the armrest frame 21 has a configuration in which two side walls 23, 24, which extend substantially parallel to each other along a longitudinal direction of the armrest 20, is coupled by two coupling walls 25, 26, as shown in Fig. 4. The side wall 24 is arranged closer to the back frame 30 than the side wall 23.

As shown in Fig. 3, the basal end of the armrest frame 21 is formed to have a U-shaped cross-section by coupling the side walls 23, 24, which are arranged in parallel, with the coupling wall 25.

Through holes 23a, 24a, positioned coaxially with each other, are respectively formed in the side walls 23, 24 of the basal end of the armrest frame 21. The through hole 23a is formed to have a smaller diameter than the through hole 24a. A restriction tube 27 is inserted from the side of the back frame 30 to the through hole 24a, and an inserting end of the restriction tube 27 is in contact with the inner surface of the side wall 23. The restriction tube 27 has a projection 27a that projects from the side wall 24 toward the back frame 30. A ring-shaped spacer 28 is fitted to the projection 27a so as to be arranged between the supporting side wall 51 and the covering frame 22. The spacer 28 is made from an impregnated metal impregnated with lubricating oil.

A distal end of the projection 27a of the restriction tube 27 is fitted to the shaft hole 51a of the supporting side wall 51 of the outer bracket 50, which is attached to the back frame 30.

As shown in Fig. 3, the shaft 80, which is a shaft portion of the bolt, extends through the through hole 23a of the armrest frame 21 and the restriction tube 27, and the nut 82 is fastened to the distal end of the shaft 80 projecting from the supporting side wall 51 of the outer bracket 50 until contacting the end of the restriction tube 27. In other words, the restriction tube 27 restricts the amount of the nut 82 fastened to the shaft 80. Due to the restriction of the nut 82 with the restriction tube 27, the armrest 20 is rotationally supported by the supporting side wall 51.

As shown in Fig. 6, a guide surface 51 b, which has the forms of a generally one-quarter arc, is formed on an upper surface of the supporting side wall 51. The center of curvature of the guide surface 51b coincides with the center of the shaft hole 51a. A stopper surface 51c is formed at the upper end portion of the guide surface 51 b, and a stopper surface 54a is provided at the upper surface of the coupling piece 54.

As shown in Fig. 2, a protrusion 22a guided by the guide surface 51b is formed on the side surface at the side of the back frame 30 of the covering frame 22.

The armrest 20 is rotatable within a range between the stopper surfaces 54a, 51 c. The armrest 20 is positioned to extend toward the front side from the seatback 10B when the protrusion 22a, which is guided by the guide surface 51 b, engages with the stopper surface 54a. The armrest 20 is positioned to extend toward the upper side when the protrusion 22a is engaged with the stopper surface 51c.

As shown in Fig. 2, an elastic covering piece 51d is coupled and fixed at the rear of the stopper surface 51c in the supporting side wall 51. The covering piece 51d can cooperatively operate with the guide surface 51b to elastically sandwich the protrusion 22a, which is in contact with the stopper surface 51c. The covering piece 51d functions to covers the protrusion 22a from the upper side when the protrusion 22a is moved to the vicinity of the stopper surface 51c in order to prevent a person's fingers from getting caught between the protrusion 22a and the stopper surface 51 c. The covering piece 51d may be configured to simply cover the stopper surface 51c from the upper side to realize only the function of preventing the finger of a person from getting caught between the protrusion 22a and the stopper surface 51 c.

As shown in Figs. 1, 3, and 4, a cover 90 is arranged to cover the inner bracket 40 and the outer bracket 50 from the opposite side of the armrest 20. The cover 90 is coupled and fixed by a screw 92 that is fastened to a screw hole 52c formed in the side wall 52 of the outer bracket 50, as shown in Figs. 3 and 6, as well as a screw 96 fastened to a screw hole 94a of a cover bracket 94, which is fixed to the side wall 42 of the inner bracket 40, as shown in Figs. 3 and 5.

### (Operation of the First Embodiment)

In the armrest coupling structure, when retrofitting the armrest 20, an assembly is formed by coupling the armrest 20 to the outer bracket 50 by the shaft 80 and the nut 82.

As shown in Figs. 3 and 4, the spacers 74 are located between the back frame 30 and the side wall 41 of the inner bracket 40 and between the back frame 30 and the side wall 42 of the inner bracket 40. The inner bracket 40 is arranged to cover the front, rear, and left of the back frame 30 with the coupling holes 41a, 41b of the inner bracket 40 aligned with the through hole 32 of the back frame 30.

In this state, the side wall 52 of the outer bracket 50 of the assembly is overlapped with the side wall 41 of the inner bracket 40, and the coupling holes 52a, 52b of the outer bracket 50 are aligned with the coupling holes 41 a, 41b of the inner bracket 40, respectively. Each through bolt 70 is inserted into the coupling holes 52a, 41a, the through hole 32, and the coupling hole 42a, as well as the coupling holes 52b, 41 b, the through hole 32, and the coupling hole 42b. Then, the inner bracket 40 and the outer bracket 50 are fastened together and fixed to the back frame 30 by the nut 72.

Subsequently, as shown in Figs. 3 and 4, the cover 90 is arranged to cover the inner bracket 40 and the outer bracket 50, and the screws 92, 96 are fastened to the screw hole 52c of the outer bracket 50 and the screw hole 94a of the inner bracket 40 to couple and fix the cover 90.

In the above description, the nut 82 is fastened to the distal end of the shaft 80, which is inserted from the inner side of the armrest 20 and projected from the inner surface of the supporting side wall 51. Instead, the shaft 80 may be inserted from the inner side of the supporting side wall 51, and the nut 82 may be fastened to the distal end of the shaft 80 projected from the armrest frame 21 of the armrest 20. Such change can be made by simply changing the coupling procedures of the outer bracket 50 and the inner bracket 40 of the bracket body 100. In other words, the positional relationship of the shaft 80 and the nut 82 can be changed by changing the coupling procedures of the bracket body 100.

In the armrest coupling structure, the outer bracket 50 and the inner bracket 40 are arranged to sandwich the back frame 30 and are fastened by the bolt 85 and the nut 86 to have high rigidity without any welding. Thus, an increase in load in the lateral direction (load in the left and right direction) applied on the armrest 20 can be withstood.

The outer bracket 50, the inner bracket 40, and the back frame 30 are fastened together so that the brackets 40, 50 can be strongly coupled, without any welding, and receive the load applied to the armrest 20.

Furthermore, the brackets 40, 50 are covered by the cover 90. This reduces the risks of injury when retrofitting and coupling the armrest 20 to the back frame 30.

The screws 92, 96 may be unfastened, the cover 90 may be detached from the inner bracket 40 and the outer bracket 50, and each through bolt 70 and the nut 72 may be unfastened to remove the assembly from the back frame 30.

The present embodiment has the following advantages.
(1) The armrest coupling structure of the present embodiment includes the back frame 30, and the bracket body 100 including the side wall 42 (front wall member), the side wall 52 (rear wall member), the side wall 43 (inner wall member) and the supporting side wall 51 (outer wall member) arranged to cover the front side, the rear side, the inner side, and the outer side of the back frame 30, respectively. The supporting side wall 51 (outer wall member) is integrally formed with the side wall 52 (rear wall member) to be directly coupled to the side wall 52, and the side wall 42 (front wall member) and the side wall 43 (inner wall member) are coupled by the bolt 85 and the nut 86 (fastening member). The armrest 20 is rotationally supported by the supporting side wall 51 (outer wall member).

The armrest coupling structure includes the through bolt 70 that extends through the side wall 42 (front wall member), the back frame 30, and the side wall 52 (rear wall member), and the nut 72 that fastens the through bolt 70.

The side wall 42 (front wall member) and the side wall 52 (rear wall member) are fastened together and fixed to the back frame 30 by the through bolt 70 and the nut 72.

As a result, according to the armrest coupling structure of the present embodiment, the coupling strength of the armrest is ensured without requiring the welding of the member used when retrofitting the armrest.

Since the armrest may be retrofitted, the armrest may be assembled by the dealer instead of the manufacturer. Since retrofitting may be performed, variations of the armrest may be increased to satisfy user requirements.
(2) In the armrest coupling structure of the present embodiment, the back frame 30 is formed by the pipe. As a result, advantage (1) is obtained with respect to the back frame 30, which is configured by the pipe in the present embodiment.
(3) The bracket body 100 of the armrest coupling structure of the present embodiment includes the outer bracket 50, in which the supporting side wall 51 (outer wall member) and the side wall 52 (rear side member) are integrally formed, and the inner bracket 40.

The inner bracket 40 includes the side wall 42 (front wall member), the side wall 43 (inner wall member) integrally formed with the side wall 42 and arranged at the inner side of the back frame 30 to cover the back frame 30, and the side wall 41 integrally formed with the side wall 43. The side wall 41 is arranged to overlap the side wall 52 (rear wall member), and the through bolt 70 extends through both of the side wall 41 and the side wall 52 (rear wall member).

The armrest coupling structure has a frame-shaped structure so as to surround the back frame 30 with the brackets 40, 50 when the outer bracket 50 and the inner bracket 40 are fastened together and fixed to the back frame 30 by the through bolt 70 and the nut 72.

As a result, according to the present embodiment, the inner bracket 40 and the outer bracket 50 are fastened together into the form of a frame to increase the rigidity of the armrest coupling structure.
(4) In the armrest coupling structure of the present embodiment, the through bolt 70 is inserted from the rear side of the back frame 30 to the inner bracket 40, the outer bracket 50, and the back frame 30.

The through bolt 70 is inserted from the rear side of the back frame 30 so that the seating section 10A (seat cushion) of the seat 10 does not become an obstacle and the retrofitting tasks of the armrest 20 can be easily performed as compared to when inserted from the front side of the back frame 30.
(5) In the armrest coupling structure of the present embodiment, the inner bracket 40 has a U-shaped cross-section formed by the side wall 43 (inner wall member), the side wall 41 (first overlapping wall member), and the side wall 42 (front wall member). The outer bracket 50 has an L-shaped cross-section formed by the supporting side wall 51 and the side wall 52 (opposing side wall). As a result, according to the present embodiment, advantage (1) is obtained by using the brackets 40, 50 that have a simple shape.

### (Second Embodiment)

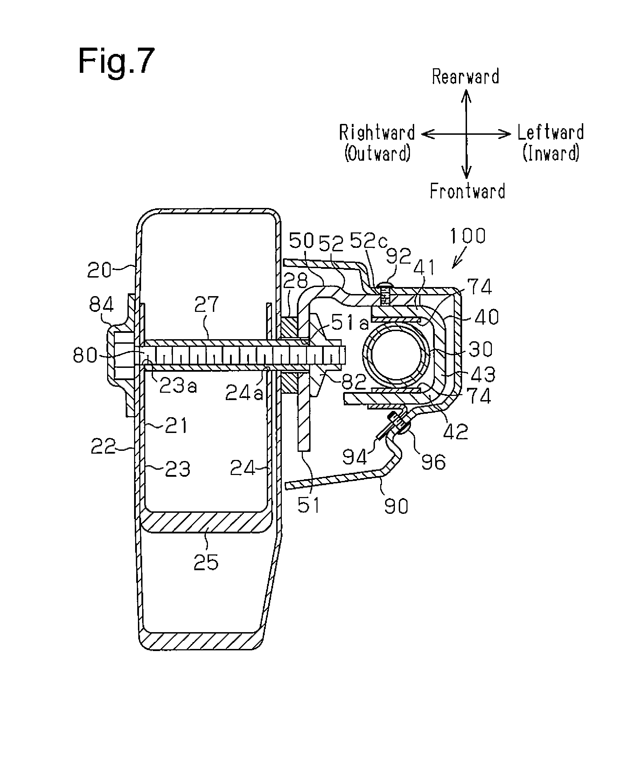

An armrest coupling structure of a second embodiment will be described with reference to Fig. 7. The configuration of the second embodiment just partially differs from the first embodiment. Thus, the same reference numerals as the first embodiment will be used for same or corresponding components of the first embodiment. Such components will not be described. As shown in Fig. 7, in the second embodiment, the side wall 23 of the armrest frame 21 is positioned proximate to the inner side of the side wall (side wall on the right side in Fig. 7) of the covering frame 22 on the side opposite to the back frame 30. As shown in the drawing, the shaft 80 differs in that it is inserted from the outer side of the covering frame 22. The head of the shaft 80 is covered by a seal material 84 attached to the outer surface of the covering frame 22.

Such configuration also has the same advantages as the first embodiment.

### (Third to Fifth Embodiments)

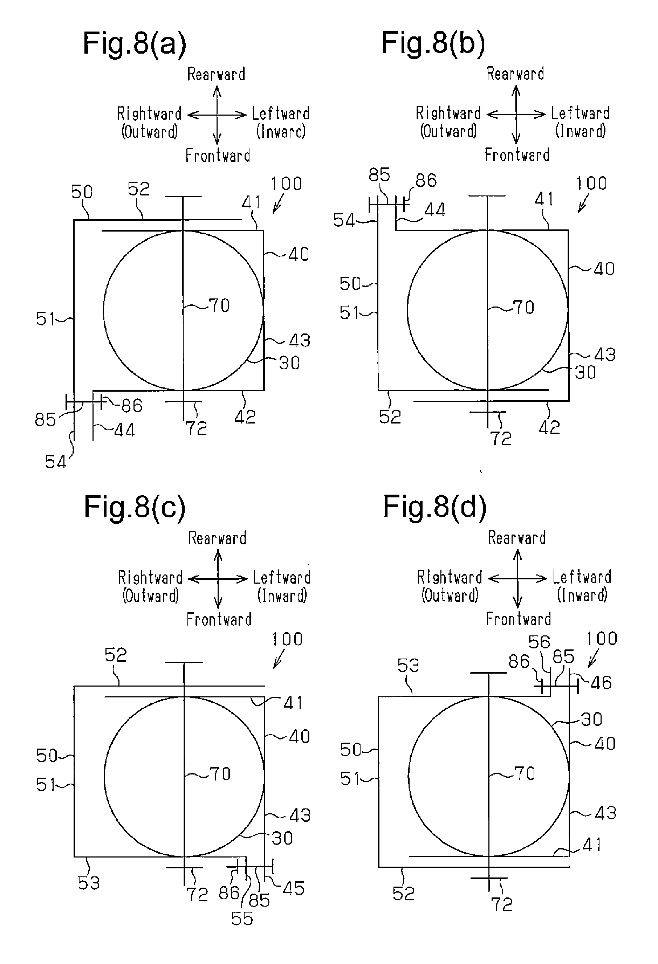

Next, third to fifth embodiments will be described with reference to Figs. 8(b) to 8(d). Figs. 8(b) to 8(d) are to be understood with reference to Fig. 8(a), which shows the armrest coupling structure of the first embodiment.

In Fig. 8(a), the armrest 20, the armrest frame 21, the cover 90, and the spacer 74 shown in Fig. 4 are omitted, and the other main components are simplified. The main configurations shown in Fig. 8(a) include the back frame 30, the inner bracket 40 (side walls 41, 42, 43), the outer bracket 50 (supporting side wall 51, side wall 52, coupling piece 54), and the bolt 85.

In Figs. 8(b) to 8(d), the armrest 20, the armrest frame 21, the cover 90, and the spacer 74 are also omitted.

### (Third Embodiment: Support for Claim 3)

As shown in Fig. 8(b), the inner bracket 40 of the bracket body 100 includes the side wall 43 (inner wall member), which covers the inner side (left side) of the back frame 30, the side wall 41 (rear wall member), which is integrally formed with the side wall 43 to be directly coupled to the side wall 43 and which covers the rear side of the back frame 30, and the side wall 42 (second overlapping side wall), which is integrally formed with the side wall 43 to be directly coupled with the side wall 43.

In the third embodiment, the inner bracket 40 has a U-shaped cross-section formed by the side walls 41, 42, 43. In the same manner as the first embodiment, the side wall 43 may be a flat plate. Alternatively, the side wall 43 may be curved along the peripheral surface of the back frame 30.

The outer bracket 50 includes the supporting side wall 51 (outer wall member), which rotationally supports the armrest 20 (not shown in Fig. 8(b)) and which is arranged to cover the outer side (right side) of the back frame 30, and the side wall 52 (front wall member), which is integrally formed with the supporting side wall 51 to be directly coupled to the supporting side wall 51 and which is faced toward and overlapped with the side wall 42 (second overlapping side wall) of the inner bracket 40. In the third embodiment, the outer bracket 50 has an L-shaped cross-section formed by the side walls 51, 52.

The supporting side wall 51 and the side wall 41 (rear wall member) of the inner bracket 40 are coupled to each other by fastening the coupling piece 44 arranged on the side wall 41 and the coupling piece 54 arranged at the rear part of the supporting side wall 51 with the bolt 85 and the nut 86. The bolt 85 and the nut 86 correspond to a fastening member.

The armrest coupling structure of the third embodiment includes the through bolt 70 and the nut 72, which is fastened to the through bolt 70. The through bolt 70 is inserted from the rear side of the back frame 30 to the side wall 41 (rear wall member) of the inner bracket 40, the back frame 30, the side wall 52 (front wall member) of the outer bracket 50, and the side wall 42 (second overlapping wall member) of the inner bracket 40

In the armrest coupling structure of the third embodiment, the inner bracket 40 and the outer bracket 50 are fastened together and fixed by the through bolt 70 and the nut 72.

The armrest coupling structure of the third embodiment has the same advantages as the first embodiment.

### (Fourth Embodiment: Support for Claim 4)

As shown in Fig. 8(c), the inner bracket 40 of the bracket body 100 includes the side wall 43 (inner wall member), which covers the inner side (left side) of the back frame 30, and the side wall 41 (third overlapping side wall), which is integrally formed with the side wall 43 to be directly coupled to the side wall 43 and which covers the rear side of the back frame 30. The inner bracket 40 has an L-shaped cross-section formed by the side wall 41 and the side wall 43.

The outer bracket 50 includes the supporting side wall 51 (outer wall member), which rotationally supports the armrest 20 (not shown in Fig. 8(c)) and which is arranged to cover the outer side (right side) of the back frame 30, and the side wall 52 (rear wall member), which is integrally formed with the supporting side wall 51 to be directly coupled to the supporting side wall 51 and which is faced toward and overlapped with the side wall 41 of the inner bracket 40.

The outer bracket 50 further includes the side wall 53 (front wall member), which is integrally formed with the supporting side wall 51 to be directly coupled to the supporting side wall 51 and which covers the front side of the back frame 30. The side wall 53 (front wall member) of the outer bracket 50 and the side wall 43 (inner wall member) of the inner bracket 40 are coupled to each other by fastening the coupling piece 45 arranged on the side wall 43 and the coupling piece 55 arranged at the front part of the side wall 53 with the bolt 85 and the nut 86. The bolt 85 and the nut 86 correspond to a fastening member.

The outer bracket 50 of the fourth embodiment has a U-shaped cross-section formed by the supporting side wall 51 and the side walls 52, 53.

The armrest coupling structure of the present embodiment includes the through bolt 70 inserted from the rear side of the back frame 30 to the side wall 52 (rear wall member) of the outer bracket 50, the side wall 41 (third overlapping wall member) of the inner bracket 40, the back frame 30, and the side wall 53 (front wall member) of the outer bracket 50, and the nut 72 fastened to the through bolt 70.

In the armrest coupling structure of the fourth embodiment, the inner bracket 40 and the outer bracket 50 are fastened together and fixed by the through bolt 70 and the nut 72.

Therefore, the armrest coupling structure of the fourth embodiment has a frame-shaped structure in which the back frame 30 is surrounded by the brackets 40, 50 when the outer bracket 50 and the inner bracket 40 are fastened together and fixed to the back frame 30 by the through bolt 70 and the nut 72.

The armrest coupling structure of the fourth embodiment has the same advantages as the first embodiment.

### (Fifth Embodiment: Support for Claim 4)

As shown in Fig. 8(d), the inner bracket 40 of the fifth embodiment includes the side wall 43 (inner wall member), which covers the inner side (left side) of the back frame 30, and the side wall 41 (third overlapping wall member), which is integrally formed with the side wall 43 (inner wall member) to be directly coupled to the side wall 43 and which covers the front side of the back frame 30. The inner bracket 40 has an L-shaped cross-section formed by the side wall 41 and the side wall 43.

The outer bracket 50 includes the supporting side wall 51, which rotationally supports the armrest 20 (not shown in Fig. 8(d)) and which is arranged to cover the outer side (right side) of the back frame 30, and the side wall 52 (front wall member), which is integrally formed with the supporting side wall 51 to be directly coupled to the supporting side wall 51 and which is faced toward and overlapped with the side wall 41 of the inner bracket 40.

The outer bracket 50 further includes the side wall 53 (rear wall member), which is integrally formed with the supporting side wall 51 to be directly coupled to the supporting side wall 51 and which covers the rear side of the back frame 30. The side wall 53 (rear wall member) of the outer bracket 50 and the side wall 43 of the inner bracket 40 are coupled to each other by fastening a coupling piece 56 arranged on the side wall 53 and a coupling piece 46 arranged at the rear part of the side wall 43 with the bolt 85 and the nut 86. The bolt 85 and the nut 86 correspond to a fastening member.

In the fifth embodiment, the outer bracket 50 has a U-shaped cross-section formed by the supporting side wall 51 and the side walls 52, 53.

The armrest coupling structure of the fifth embodiment includes the through bolt 70 inserted from the rear side of the back frame 30 to the side wall 52 (front wall member) of the outer bracket 50, the side wall 41 (third overlapping wall member) of the inner bracket 40, the back frame 30, and the side wall 53 (rear wall member) of the outer bracket 50, and the nut 72 fastened to the through bolt 70. In the armrest coupling structure of the fifth embodiment, the inner bracket 40 and the outer bracket 50 are fastened together and fixed by the through bolt 70 and the nut 72.

Therefore, the armrest coupling structure of the fifth embodiment has a frame-shaped structure in which the back frame 30 is surrounded by the brackets 40, 50 when the outer bracket 50 and the inner bracket 40 are fastened together and fixed to the back frame 30 by the through bolt 70 and the nut 72.

The fifth embodiment has the same advantages as the first embodiment.

### (Sixth Embodiment)

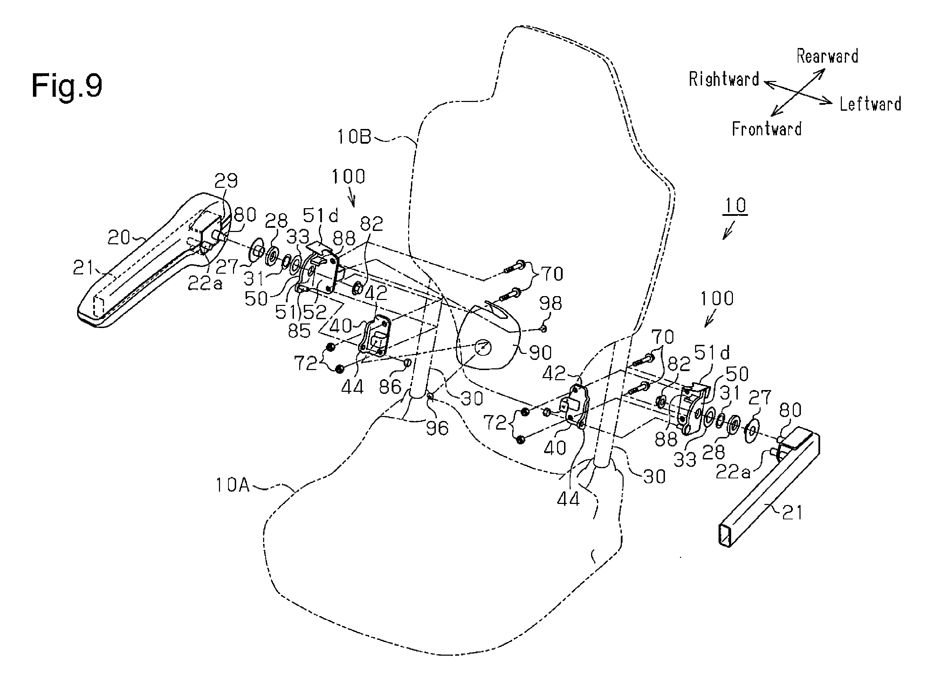

A sixth embodiment of the present invention will now be described with reference to Figs. 9 to 15. In the sixth embodiment and the seventh embodiment, which will be described later, the same reference numerals are used for same or corresponding components of the first embodiment. Such components will not be described in detail.

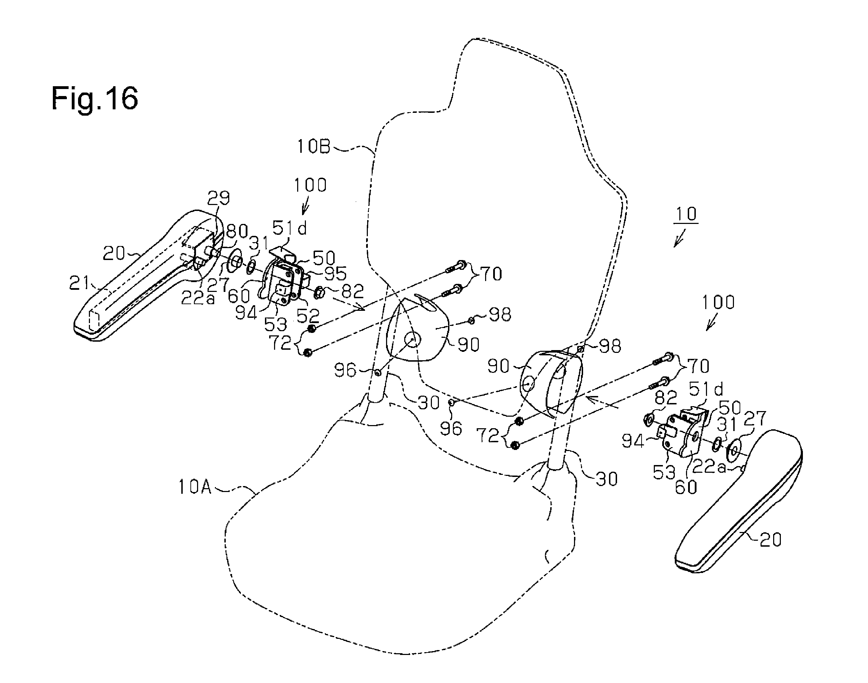

In the sixth embodiment and the seventh embodiment, which will be described later, each member for coupling the left armrest 20 to the left side of the back frame 30 and each member for coupling the right armrest 20 to the right side to the back frame 30 have a symmetrical configuration with respect to each other. Thus, in Figs. 9 and 16, the same reference numerals as the components corresponding to the armrest coupling structure of the right back frame 30 are used for each of the components corresponding to the left armrest coupling structure of the back frame 30 to ease description. Such components will not be described. Hereinafter, the armrest coupling structure of the back frame 30 on the right side of the vehicle seat 10 will be described.

In the first embodiment shown in Fig. 3, the inner bracket 40 has a U-shaped cross-section formed by the side walls 41, 42, 43. The sixth embodiment differs in that the side walls 41, 43 are omitted and the inner bracket 40 is configured by the side wall 42, as shown in Figs. 9 and 10 to 14.

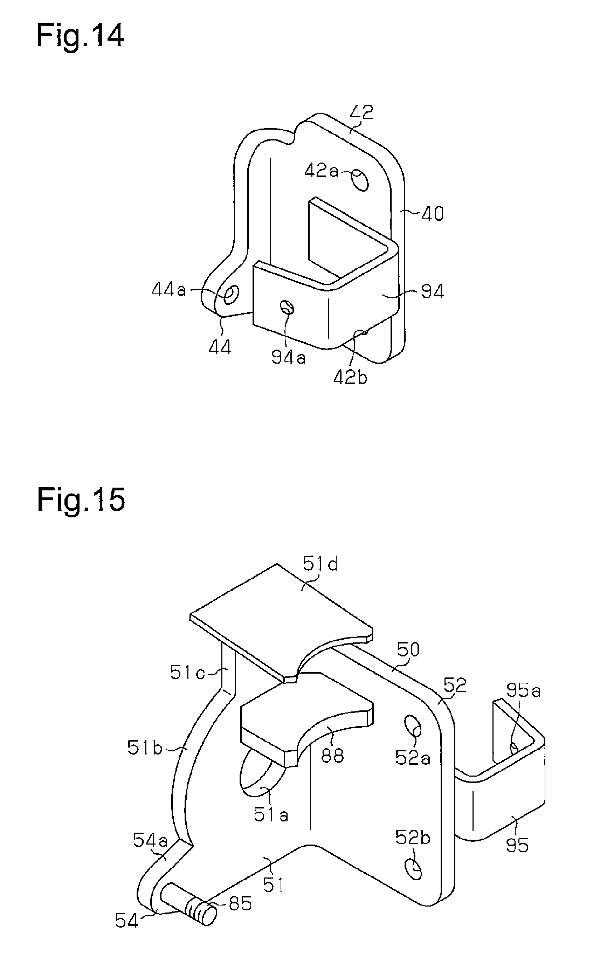

As shown in Fig. 14, the side wall 42 includes the coupling piece 44, which is bent to lie along the supporting side wall 51, in the same manner as the first embodiment.

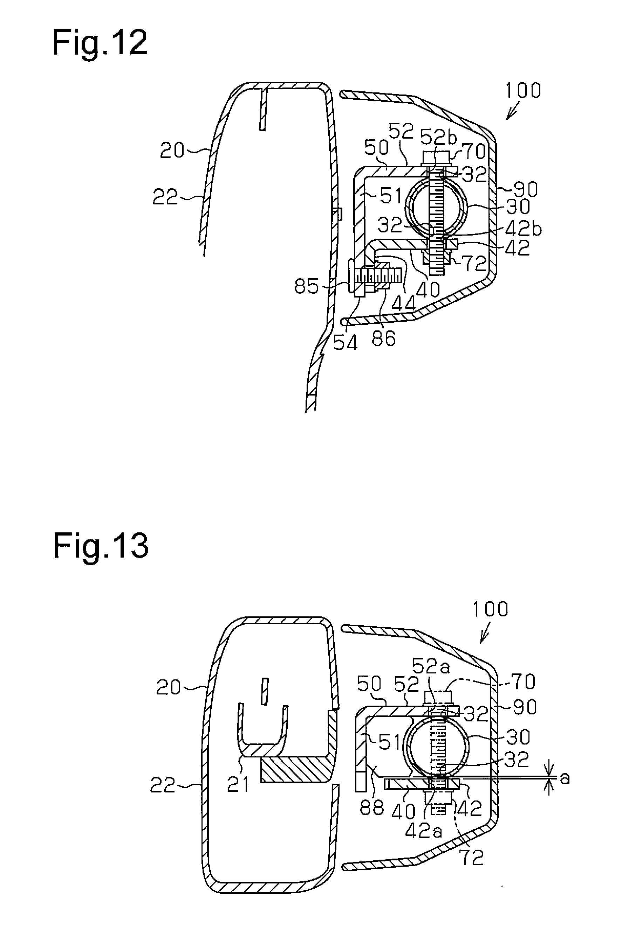

As shown in Fig. 12, the inner bracket 40 (i.e., side wall 42) is fastened to the coupling piece 54 of the outer bracket 50 by the bolt 85, which is welded and fixed to the coupling piece 54, and the nut 86, which is fastened to the bolt 85, like the first embodiment. The bolt 85 and the nut 86 correspond to a fastening member. In the sixth embodiment, the coupling hole 44a of the coupling piece 44, through which the bolt 85 is inserted, is an elongated hole that extends in the front to rear direction. Since the coupling hole 44a is an elongated hole, the inner bracket 40 can be adjusted and moved toward the back frame 30 when fastening the bolt 70 and the nut 72, which will be described later. The adjustment is performed to leave a gap between the supporting side wall 51 and a metal support 29, which will be described later.

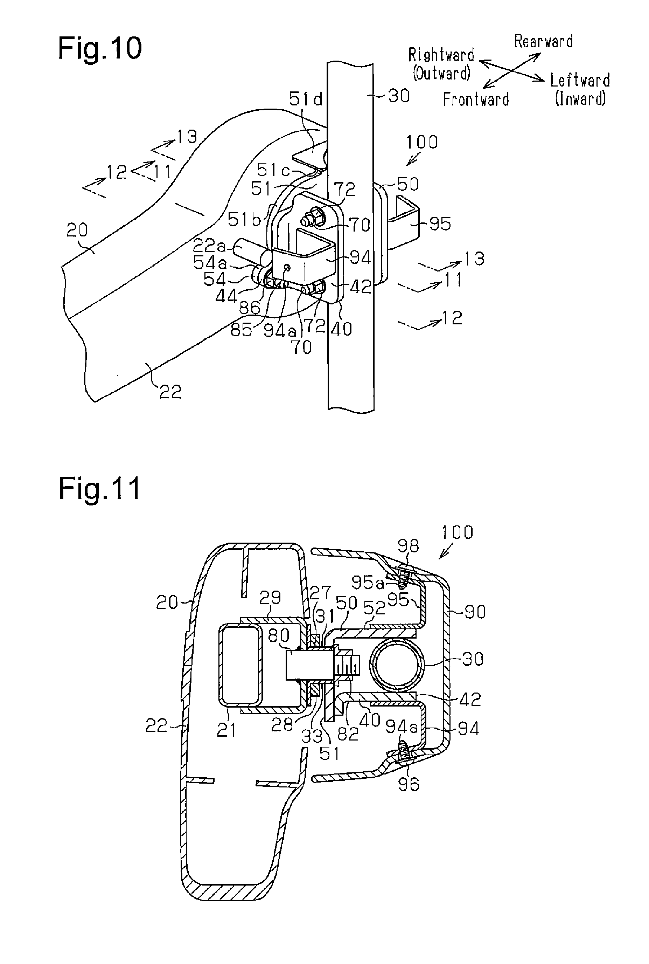

As shown in Fig. 3, the shaft 80 of the first embodiment is a shaft portion of the bolt. The shaft 80 is coupled and fixed to the armrest frame 21 extending through the armrest frame 21. In the sixth embodiment, the shaft 80 has a basal end welded and fixed to the metal support 29, which has a U-shaped cross-section and which is fixed to the armrest frame 21, as shown in Fig. 11. The distal end of the shaft 80 extends through the supporting side wall 51, and the nut 82 is fastened to the shaft 80. The restriction tube 27 has a flange arranged between the nut 82 and the metal support 29. The restriction tube 27 restricts movement of the supporting side wall 51 toward the metal support 29 to obtain the gap between the supporting side wall 51 and the metal support 29 when the nut 82 is fastened to the distal end of the shaft 80. A spacer 28, an undulated washer 31, and a spacer 33, which are fitted on the metal support 29, are arranged in the gap to produce frictional resistance during the rotation of the metal support 29 (i.e., armrest 20).

As shown in Figs. 10, 12, and 13, the inner bracket 40 and the outer bracket 50 are fastened together and fixed to the back frame 30 by a plurality of through bolts 70 and nuts 72 to sandwich the back frame 30 with the side wall 52 and the side wall 42.

Each bolt 70 is inserted into the coupling hole 42a of the inner bracket 40 and the coupling hole 52a of the outer bracket 50 or into the coupling hole 42b of the inner bracket 40 and the coupling hole 52b of the outer bracket 50. The bolt 70 is further inserted into the through hole 32 formed in the back frame 30. Fig. 13 shows the through bolt 70 and the nut 72 with double-dashed lines, which are hypothetical lines, to show the state before the fastening the through bolt 70 and the nut 72. The drawing shows that a minimal gap of distance a exists between a plastic deformation preventing member 88, which will be described later, and the side wall 42.

As shown in Fig. 15, the outer bracket 50 includes the plastic deformation preventing member 88, which is made of metal, welded and fixed to the inner surface of the supporting side wall 51 and the side wall 52. The plastic deformation preventing member 88 extending from the inner surface of the supporting side wall 51 facing the back frame 30 is arranged between the back frame 30 and the inner surface facing the back frame 30 of the supporting side wall 51. The plastic deformation preventing member 88 may not be fixed to the inner surface of the side wall 52. As shown in Fig. 15, the plastic deformation preventing member 88 is planar in the present embodiment. However, the plastic deformation preventing member 88 does not have to be planar and may have the form of a block, for example.

The plastic deformation preventing member 88 shown in Fig. 13 is arranged between the side wall 42 of the inner bracket 40 and the side wall 52 of the outer bracket 50.

The brackets 40, 50 are fastened to the back frame 30 against the elastic forces of the side walls 42, 52 by the through bolt 70 and the nut 72 with a slight gap (i.e., distance a) formed between the plastic deformation preventing member 88 and the side wall 42 of the inner bracket 40. The fastening is performed with a preset fastening torque that causes a very small deformation to eliminate the gap (i.e., distance a) and does not eliminate the elastic force of the back frame 30. This prevents the occurrence of rattling by the elasticity of the back frame 30 and the elasticity of the brackets 40, 50.

As shown in Figs. 10, 11, and 15, a cover bracket 95 including a screw hole 95a is welded and fixed to the back surface of the side wall 52 of the outer bracket 50.

As shown in Fig. 11, the cover 90 is arranged to cover the inner bracket 40 and the outer bracket 50 from the inner side. The cover 90 is coupled and fixed by fastening the screws 96, 98 to the screw hole 95a of the cover bracket 95 and the screw hole 94a of the inner bracket 40.

In the present embodiment, the side wall 42 of the inner bracket 40 configuring the bracket body 100 corresponds to the front wall member, the supporting side wall 51 of the outer bracket 50 configuring the bracket body 100 corresponds to the outer wall member, and the side wall 52 corresponds to the rear wall member.

### (Operation of Sixth embodiment)

The operation of the sixth embodiment will now be described.

Here, the through hole 32 is formed in the back frame 30 in advance. First, the restriction tube 27, the spacer 28, the undulated washer 31, the spacer 33, and the outer bracket 50 are inserted through the shaft 80 of the armrest 20 and coupled with the nut 82. The inner bracket 40 is coupled to the outer bracket 50 with the bolt 85 and the nut 86 to obtain the assembly.

As shown in Figs. 12 and 13, the assembly is arranged so that the back frame 30 is sandwiched between the outer bracket 50 and the inner bracket 40. The coupling hole 52a of the outer bracket 50 and the coupling hole 42a of the inner bracket 40, as well as the coupling hole 52b of the outer bracket 50 and the coupling hole 42b of the inner bracket 40 are aligned with each through hole 32 of the back frame 30. Then, each through bolt 70 is then inserted through the coupling holes 52a, 42a and the through hole 32 as well as the coupling holes 52b, 42b and the through hole 32. Subsequently, the inner bracket 40 and the outer bracket 50 are fastened together and fixed to the back frame 30 by the nut 72.

In this case, the brackets 40, 50 are fastened to the back frame 30 against the elastic forces of the side walls 42, 52 by the through bolt 70 and the nut 72 with a slight gap (i.e., distance a) formed between the plastic deformation preventing member 88 and the side wall 42 of the inner bracket 40. This fastening is performed with a preset fastening torque causing a very small deformation that eliminates the gap but does not eliminate the elastic force of the back frame 30.

Then, as shown in Fig. 11, the cover 90 is coupled by fastening the screws 96, 98 to the screw hole 95a of the cover bracket 95 and the screw hole 94a of the inner bracket 40.

The sixth embodiment has the following advantages in addition to advantages (1), (2), and (4) of the first embodiment.
(1) In the present embodiment, the plastic deformation preventing member 88 that prevents the plastic deformation of the back frame 30 during the fastening of the through bolt 70 is arranged between the inner surface facing the back frame 30 of the supporting side wall 51 (outer wall member) and the back frame 30.
   As a result, according to the present embodiment, the plastic deformation of the back frame 30 is prevented by the plastic deformation preventing member 88 during the fastening of the through bolt.
   Furthermore, in the present embodiment, the function of a spring washer such as the undulated washer that prevents reduction in the torque fastening the through bolt 70 and the nut 72 may be substituted by the plastic deformation preventing member 88 and the back frame 30, which is formed by a pipe material.
(2) In the present embodiment, the side wall 42 (front wall member) of the bracket body 100 and the side wall 52 (rear wall member) are arranged to form a gap with the back frame 30 before fastening the through bolt 70. When fastening the through bolt 70 and the nut 72, the plastic deformation preventing member 88 tolerates movement of the side wall 42 and the side wall 52 against the elastic force of the side wall 42 (front wall member) and the side wall 52 (rear wall member) until elimination of at least the gap (i.e., distance a).

As a result, the occurrence of rattling is prevented by the elastic force that tolerates movement of the side walls 42, 52 until the gap is eliminated.

In addition, in the present embodiment, the back frame 30 elastically deforms within a range tolerated by the plastic deformation preventing member 88 during the fastening of the through bolt 70. This prevents rattling when fastening the through bolt 70 and the nut 72. Accordingly, in the present embodiment, the occurrence of rattling is prevented by the elasticity of the back frame 30 and the elasticity of the brackets 40, 50.

The plastic deformation preventing member 88 may restrict deformation of the back frame 30 while tolerating elastic deformation of the bracket body 100.

### (Seventh Embodiment: Support for Claim 5)

A seventh embodiment will now be described with reference to Figs. 16 to 20. The difference of the seventh embodiment from the sixth embodiment will be described, and the same reference numerals will be used for components that are the same as or correspond to the components of the sixth embodiment.

The seventh embodiment differs from the sixth embodiment in that the inner bracket is omitted and the bracket body 100 is configured by the outer bracket 50 and a reinforcement member 60.

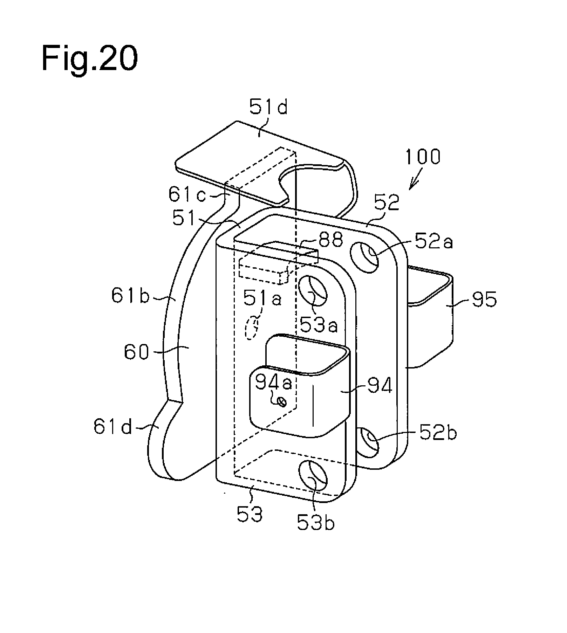

Specifically, as shown in Fig. 20, the outer bracket 50 has a U-shaped cross-section formed by the supporting side wall 51, the side wall 52 serving as the rear wall member, and the side wall 53 serving as the front wall member. As shown in Fig. 20, the side wall 53 includes coupling holes 53a, 53b that are respectively coaxial with the coupling holes 52a, 52b of the side wall 52. The configuration of the outer bracket 50 also corresponds to the configuration in which the inner bracket 40 and the coupling piece 55 are omitted in the fourth embodiment shown in Fig. 8(c). The reinforcement member 60 is a metal plate and welded and integrally fixed to the outer surface of the supporting side wall 51.

The supporting side wall 51 includes the guide surface 51b and the stopper surface 51c in the first embodiment and the sixth embodiment. However, the guide surface 51b and the stopper surface 51c of the supporting side wall 51 are omitted in the seventh embodiment.

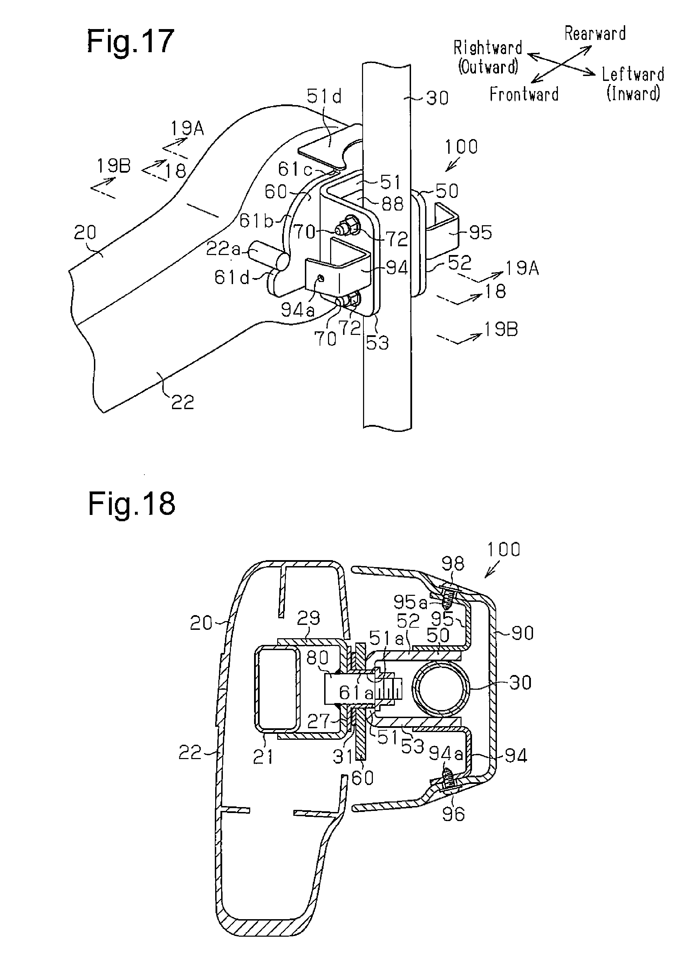

Instead, the reinforcement member 60 includes a guide surface 61 b, a stopper surface 61 c, and a stopper surface 61d, as shown in Figs. 17 and 20. Furthermore, as shown in Fig. 18, the reinforcement member 60 includes a shaft hole 61a that is coaxial with the shaft hole 51a of the supporting side wall 51. The mutual position relationship of the shaft hole 61a, the guide surface 61b, and the stopper surfaces 61c, 61d is similar to that of the shaft hole 51a, the guide surface 51b, and the stopper surfaces 51c, 54a described in the first embodiment. Therefore, the guide surface 61b and the stopper surfaces 61c, 61d function in the same manner as the guide surface 51b and the stopper surfaces 51 c, 54a of the first embodiment with respect to the protrusion 22a arranged on the armrest 20.

As shown in Fig. 11, the cover bracket 94 is fixed to the side wall 42 of the inner bracket 40 in the sixth embodiment. The seventh embodiment differs in that the cover bracket 94 is fixed to the side wall 53, as shown in Figs. 16, 18, and 20.

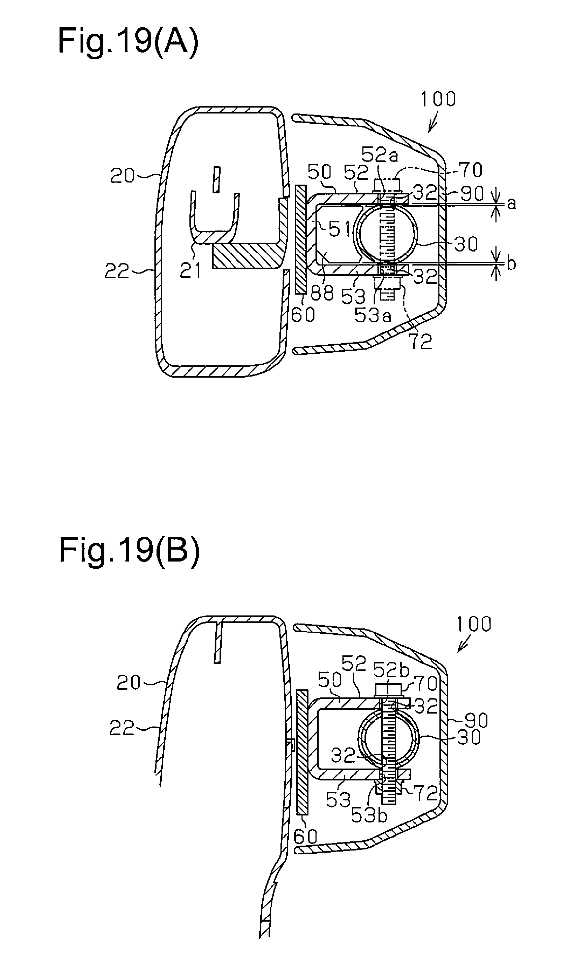

Furthermore, as shown in Fig. 19(A), the plastic deformation preventing member 88 is welded and fixed to the inner surface of the supporting side wall 51 in the seventh embodiment. Before being fastened by the through bolt 70, the size of the plastic deformation preventing member 88 is set so that a slight gap (i.e., distances a, b) is formed between the plastic deformation preventing member 88 and the inner surface of the side wall 52 and between the plastic deformation preventing member 88 and the inner surface of the side wall 53. The distances a, b are preferably the same but may differ from each other as long as the difference is not large.

The outer bracket 50 is fastened to the back frame 30 against the elastic forces of the side walls 52, 53 by the through bolt 70 inserted through each of the coupling holes 52a, 53a and the coupling holes 52b, 53b, and the nut 72. The fastening is performed with a fastening torque causing a very small deformation that eliminates the gap (i.e., distances a, b) but does not eliminate the elastic force of the back frame 30.

In the present embodiment, a covering piece 51d is fixed to the reinforcement member 60.

### (Operation of Seventh Embodiment)

The operation of the seventh embodiment will now be described.

As shown in Figs. 19(A) and 19(B), the through hole 32 is formed in the back frame 30 in advance.

As shown in Fig. 18, the restriction tube 27, the undulated washer 31, and the shaft hole 61a and the shaft hole 51 a of the bracket body 100 are inserted through the shaft 80 of the armrest 20 and coupled with the nut 82 to obtain the assembly.

The assembly is arranged such that the back frame 30 is sandwiched between the side walls 52, 53 of the outer bracket 50, as shown in Figs. 19(A) and 19(B).

The coupling holes 52a, 53a and the coupling holes 52b, 53b of the outer bracket 50 are aligned with each through hole 32 of the back frame 30. In this situation, each through bolt 70 is inserted through the coupling holes 52a, 53a and the through hole 32 as well as the coupling holes 52b, 53b and the through hole 32. Then, the side walls 52, 53 of the outer bracket 50 are fastened together and fixed to the back frame 30 by the nut 72.

In this case, the side walls 52, 53 are fastened to the back frame 30 against the elastic forces of the side walls 52, 53 by the through bolt 70 and the nut 72 with a slight gap (i.e., distances a, b) formed between the plastic deformation preventing member 88 and the side wall 42 of the inner bracket 40. The fastening is performed with a preset fastening torque causing a very small deformation that eliminates the gap but does not eliminate the elastic force of the back frame 30.

Then, as shown in Fig. 18, the cover 90 is coupled by fastening the screws 96, 98 to the screw holes 94a, 95a of the cover brackets 94, 95.

The seventh embodiment has the following advantage in addition to advantages (1), (2), and (4) of the first embodiment and advantages (1) and (2) of the sixth embodiment.
(1) The bracket body 100 of the present embodiment includes the outer bracket 50 in which the side wall 53 (front wall member) and the side wall 52 (rear wall member) are formed integrally with and directly coupled to the supporting side wall 51 (outer wall member). The bracket body 100 also includes the reinforcement member 60, which is fixed to the outer surface of the supporting side wall 51 (outer wall member) and which rotationally supports the armrest 20 and the supporting side wall 51 (outer wall member). As a result, the bracket body having a simple configuration in which the inner bracket is omitted can be obtained in the present embodiment. The fastening member for coupling the inner bracket 40 and the outer bracket 50 is required in the first to sixth embodiments but omitted in the present embodiment.

The configuration of the embodiments described above may be modified as below.

In each embodiment described above, the armrest coupling structure for retrofitting the armrest to the vehicle seat has been described but the present invention can also be applied when retrofitting the armrest to a vertically extending frame material arranged in a structure other than a vehicle seat.

In the first embodiment, the back frame 30 is formed by a round tubular pipe but may be formed by a square pipe.

The back frame 30 may be formed by a solid rod instead of the pipe.

In the first embodiment, there are more than one through bolts 70 and nuts 72. However, there may be only one of each of the through bolt 70 and the nut 72 if the back frame 30 is formed with the square pipe as described above. Thus, even if only one of each of the through bolt 70 and the nut 72 is used, when the back frame 30 is formed by the square pipe, the side walls 41, 42 and the side wall 43 of the inner bracket 40 are flat. By managing the fastening force of the through bolt 70 and the nut 72, sufficient coupling strength can be obtained for the bracket.

In the first embodiment, the inner bracket 40 has a U-shaped cross-section but may have a C-shaped cross-section. In other words, in addition to the side wall 43, the side walls 41, 42 of the inner bracket 40 may also be curved along the peripheral surface of the back frame 30.

In the third embodiment shown in Fig. 8(b), the side wall 52 of the outer bracket 50 and the side wall 42 of the inner bracket 40 are overlapped such that the side wall 52 is located closer to the back frame 30 than the side wall 42 but may be overlapped such that the side wall 42 is located closer to the back frame 30 than the side wall 52.

In each of the fourth and fifth embodiments shown in Figs. 8(c) and 8(d), the side wall 52 of the outer bracket 50 and the side wall of the inner bracket 40 are overlapped such that the side wall 41 is located closer to the back frame 30 than the side wall 52 but may be overlapped such that the side wall 52 is located closer to the back frame 30 than the side wall 41.

In each of the embodiments described above, the through bolt 70 extends through the outer bracket and the inner bracket from the rear side but may extend through the outer bracket and the inner bracket from the front side and fastened with the nut 72.

As shown by the double-dashed line in Fig. 4, the plastic deformation preventing member 88 may be fixed to the inner surface of the supporting side wall 51 in the armrest coupling structure of the first embodiment.

### DESCRIPTION OF THE REFERENCE SYMBOLS

10: vehicle seat, 20: armrest, 30: back frame, 40: inner bracket, 41: side wall, 42: side wall, 43: side wall, 50: outer bracket, 51: supporting side wall, 52: side wall, 53: side wall, 70: through bolt, 72: nut, 88: plastic deformation preventing member, 100: bracket body.

## Claims

1. An armrest coupling structure comprising:
a frame material extending in a vertical direction;
a bracket body including a front wall member, a rear wall member, and an outer wall member respectively arranged to cover at least a front side, a rear side, and an outer side of the frame material, wherein the outer wall member is coupled directly to one of the front wall member and the rear wall member and coupled directly or by a fastening member to the other one of the front wall member and the rear wall member, and the outer wall member rotationally supports an armrest;
a through bolt that extends through the front wall member, the frame material, and the rear wall member; and
a nut fastened to the through bolt;
wherein the front wall member and the rear wall member are fastened together and fixed to the frame material by the through bolt and the nut.

2. The armrest coupling structure according to claim 1, wherein
the bracket body includes an outer bracket, in which the outer wall member and the rear wall member are directly coupled to each other, and an inner bracket; and
the inner bracket includes only the front wall member or
the inner bracket includes
the front wall member,
an inner wall member directly coupled to the front wall member and arranged at an inner side of the frame material to cover the frame material, and
a first overlapping wall member directly coupled to the inner wall member and arranged overlapping the rear wall member, wherein the through bolt extends through the first overlapping wall member and the rear wall member.

3. The armrest coupling structure according to claim 1, wherein
the bracket body includes an outer bracket, in which the outer wall member and the front wall member are directly coupled to each other, and an inner bracket; and
the inner bracket includes
the rear wall member,
an inner wall member directly coupled to the rear wall member and arranged at an inner side of the frame material to cover the frame material, and
a second overlapping wall member directly coupled to the inner wall member and arranged overlapping the front wall member, wherein the through bolt extends through the second overlapping wall member and the front wall member.

4. The armrest coupling structure according to claim 1, wherein
the bracket body includes an outer bracket, in which the front wall member and the rear wall member are directly coupled to the outer wall member, and an inner bracket; and
the inner bracket includes
an inner wall member arranged at an inner side of the frame material to cover the frame material and coupled to one of the front wall member and the rear wall member by a fastening member, and
a third overlapping wall member directly coupled to the inner wall member and arranged overlapping the other one of the front wall member and the rear wall member, wherein the through bolt extends through the third overlapping wall member.

5. The armrest coupling structure according to claim 1, wherein the bracket body includes
an outer bracket in which the front wall member and the rear wall member are directly coupled to the outer wall member, and
a reinforcement member fixed to an outer surface of the outer wall member, wherein the reinforcement member rotationally supports the armrest and the outer wall member.

6. The armrest coupling structure according to any one of claims 1 to 5, wherein the frame material is formed by a pipe.

7. The armrest coupling structure according to claim 6, wherein a plastic deformation preventing member that prevents plastic deformation of the frame material when fastening the through bolt is located between the frame material and an inner surface of the outer wall member facing the frame material.

8. The armrest coupling structure according to claim 7, wherein the front wall member and the rear wall member of the bracket body are arranged to form a gap with the frame material before fastening the through bolt, and the plastic deformation preventing member tolerates movement of the front wall member and the rear wall member until at least the gap is eliminated against an elastic force of the front wall member and the rear wall member when fastening the through bolt and the nut.
